# EUROPÄISCHE PATENTANMELDUNG

(11) **EP 4 756 275 A1**
(43) Veröffentlichungstag der Anmeldung: **10.06.2026**
(21) Anmeldenummer: 24218482.8
(22) Anmeldetag: 09.12.2024
(51) Int. Cl.: F16L 19/02, F16L 19/028

(54) **VERBINDUNGSANORDNUNG FÜR EINE ROHRVERSCHRAUBUNG**

(71) Anmelder: WALTER STAUFFENBERG GMBH & CO. KG, 58791 Werdohl (DE)
(72) Erfinder: Herr König, Ulrich Stefan, 58849 Herscheid (DE); Herr Aul, Alexander, 59423 Unna (DE)
(74) Vertreter: Patentanwälte Dörner & Kötter PartG mbB

(57) **Zusammenfassung**

Die Erfindung betrifft eine Verbindungsanordnung, umfassend ein Rohrstück (1), einen Anschlusskörper (2) und eine Überwurfmutter (3) zum An-schluss des Rohrstücks (1) an den Anschlusskörper (2), wobei der Anschlusskörper (2) eine erste zylindrische Bohrung (21) zur Aufnahme des Rohrstücks (1) und eine an die erste zylindrische Bohrung (21) anschließende, durchmesserreduzierte zweite zylindrische Bohrung (22) aufweist, wobei stirnseitig eine quer zur ersten zylindrischen Bohrung (21) angestellte Anpressfläche (23) vorhanden ist, die Überwurfmutter (3) eine erste zylindrische Bohrung (31) zur Aufnahme des Rohrstücks (1) aufweist, an die sich eine durchmesservergrößerte zweite Bohrung (32) anschließt, wobei ein Innengewinde (33) zum Aufschrauben auf ein an dem Anschlusskörper (2) hierzu angeordnetes Außengewinde (24) angeordnet ist, das Rohrstück (1) einen beabstandet zu seinem Ende einen umlaufenden nach außen kragenden Abschnitt (11) aufweist, wobei die durchmesservergrößerte zweite Bohrung (32) der Überwurfmutter (3) zylindrisch ausgebildet ist, wodurch eine quer zu dieser angestellte Anschlagfläche (34) gebildet ist und wobei der nach außen kragende Abschnitt (11) durch eine Faltung des Rohrstücks (1) gebildet ist und zwei parallel zueinander gegenüberliegenden Anlageflächen zur Anlage an der Anschlagfläche (34) der Überwurfmutter (3) einerseits und an der stirnseitigen Anpressfläche (23) des Anschlusskörpers (2) andererseits aufweist, zwischen denen der Abschnitt (11) im montierten Zustand eingeklemmt ist.

## Beschreibung

Die Erfindung betrifft Verbindungsanordnung zum Anschluss eines zylindrischen, dünnwandigen Rohrstücks an einen Anschlusskörper nach dem Patentanspruch 1.

Rohrverschraubungen lassen sich im Wesentlichen in drei Arten aufteilen: Schneidringverschraubungen, Rohrumform-Systemverschraubungen und Klemmringverschraubungen. In vielen Hydraulikanwendungen werden heutzutage die klassischen Schneidringverschraubungen durch Rohrumform-Systeme ersetzt, wie es beispielsweise in der EP 2 162 662 B1 beschrieben ist. Hierbei ist, wie auch bei einem Schneidring-System, an dem Rohr ein 45° Konus angeformt, der mit einer in der anliegenden Mutter vorhandenen 45° Schräge zusammenwirkt, um das Rohr in dem Verschraubungskörper zu fixieren. Da es sich bei dem bekannten Rohrumform-System um allgemeines Hydrauliksystem handelt, das auch in Hochdruckanwendungen eingesetzt wird, ist dieses für dickwandige Hydraulikrohre konstruiert. Durch die Stabilität dieser Rohre können die erforderlichen, teilweise hohen Drehmomente aufgebracht werden, um Funktion und Dichtheit der Verschraubung zu gewährleisten.

Bei der Herstellung von Triebwagen und Waggons von Zügen, Straßenbahnen sowie U- und S-Bahnen werden unterhalb sowie auch innerhalb der Triebwagen und Waggons lange Rohrleitungen verbaut, die zur Versorgung und Weiterleitung von Brems-, Klima- und Hydrauliksystemen innerhalb eines Zuges erforderlich sind. Insbesondere die dort sehr umfangreich für Bremsanlagen eingesetzten Rohrleitungen werden mit Luft und einem niedrigen Druck von 12 bar betrieben. Ein zunehmender Anforderungsfaktor bei der Ausrüstung von Fahrzeugen, insbesondere auch von Bahnwaggons ist die Gewichtsreduzierung zur Einsparung von Energie. Aufgrund des niedrigen Drucks ist vor diesem Hintergrund der Einsatz von sehr dünnwandigen Rohren möglich. In diesem Bereich kommen vornehmlich Schneidring- und Klemmringschrauben zum Einsatz. Das Rohrumform-System in seiner bekannten Ausführung hat aufgrund der sehr geringen Wandstärken nur eine eingeschränkte Stabilität, die zu einer ungewünschten hohe Nachgiebigkeit bei der Aufbringung der Drehmomenten führt.

Hier setzt die vorliegende Erfindung an. Der Erfindung liegt die Aufgabe zu Grunde, eine Verbindungsanordnung zum Anschluss eines zylindrischen, dünnwandigen Rohrstücks an einen Anschlusskörper bereitzustellen, die gewichtsminimiert ausgebildet ist und bei der eine Nachgiebigkeit bei Aufbringung von Drehmomenten vermieden ist. Gemäß der Erfindung wird diese Aufgabe durch eine Verbindungsanordnung mit den Merkmalen des Patentanspruchs 1 gelöst.

Mit der Erfindung ist eine Verbindungsanordnung zum Anschluss eines zylindrischen, dünnwandigen Rohrstücks an einen Anschlusskörper bereitgestellt, die gewichtsminimiert ausgebildet ist und bei der eine Nachgiebigkeit bei Aufbringung von Drehmomenten vermieden ist. Dadurch, dass der nach außen kragende Abschnitt durch eine Faltung des Rohrstücks gebildet ist, wobei die Überwurfmutter - entgegen der im Stand der Technik vorhandenen 45° Anpressfläche - eine 90° Anpressfläche aufweist, ist eine gute Unterstützung des Rohrs erzielt, das mit seinem nach außen kragenden Abschnitt zwischen dieser Anpressfläche und der stirnseitigen Anpressfläche des Anschlusskörpers flächig eingeklemmt ist. Der Anschlusskörper kann sowohl als Verbindungsstück für zwei Rohre, als auch in Form eine T-Stücks ausgebildet sein. Die Anschlüsse für das weitere (bei Ausbildung als Verbindungstück) bzw. die weiteren Rohre (bei Ausbildung als T-Stück) können in gleicher Weise oder auch in bekannter Art und Weise, beispielsweise als Gewindeanschluss ausgebildet sein.

In Weiterbildung der Erfindung ist der nach außen kragende Abschnitt (11) orthogonal zur Rohrachse des Rohrstücks angeordnet, wobei der Übergang zwischen der Außenmantelfläche des Rohrstücks und der der Anschlagfläche der Überwurfmutter zugewandten Anlagefläche des nach außen kragenden Abschnitt einen kreisbogenförmigen Querschnitt mit einem Radius R aufweist, wobei der Übergang der ersten Bohrung zur durchmesservergrößerten zweiten Bohrung einen kreisbogenförmigen Querschnitt mit einem dem Radius R im Wesentlichen entsprechenden Radius aufweist. Hierdurch ist eine flächige durchgehende Anlage der Anlagefläche des nach außen kragende Abschnitts und des sich an diesen anschließenden Rohrabschnitt erzielt, wodurch die Stabilität der Verbindung weiter erhöht ist. Eine besonders gute flächige Anlage kann dadurch erzielt werden, dass der Radius des Übergangs möglichst groß gewählt wird. Hierdurch werden insbesondere Kerbwirkungen vermieden.

In Ausgestaltung der Erfindung weist der Anschlusskörper (2) eine von seiner Anpressfläche ausgehende kegelige Bohrung auf, an die sich die erste zylindrische Bohrung anschließt, mit der sie fluchtet. Dabei ist vorteilhaft zwischen dem Rohrstück und der kegeligen Bohrung ein Raum begrenzt, in dem ein bevorzugt weichdichtender Dichtring angeordnet ist. Durch die schräge Führung der kegeligen Bohrung ist eine gleichmäßige Kompression des Dichtrings im Zuge der Montage bewirkt, wodurch eine gleichmäßige Dichtwirkung erzielt ist.

In weiterer Ausgestaltung der Erfindung weist die Überwurfmutter einen Außenmehrkantabschnitt, insbesondere Außensechskantabschnitt auf, an den sich ein außendurchmesserverminderter hohlzylindrischer Führungsabschnitt anschließt. Der Außenmehrkantabschnitt dient dabei als Werkzeugeingriff. Durch den sich anschließenden durchmesserverminderten hohlzylindrischen Führungsabschnitt ist eine verlängerte Führung und dadurch eine verbesserte Abstützung des aufgenommenen Rohrstücks bei gleichzeitiger Gewichtsreduzierung bewirkt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1:: die schematische Darstellung einer Verbindungsanordnung im Längsschnitt und
- Figur 2:: die Detaildarstellung des Ausschnitts A in Figur 1.

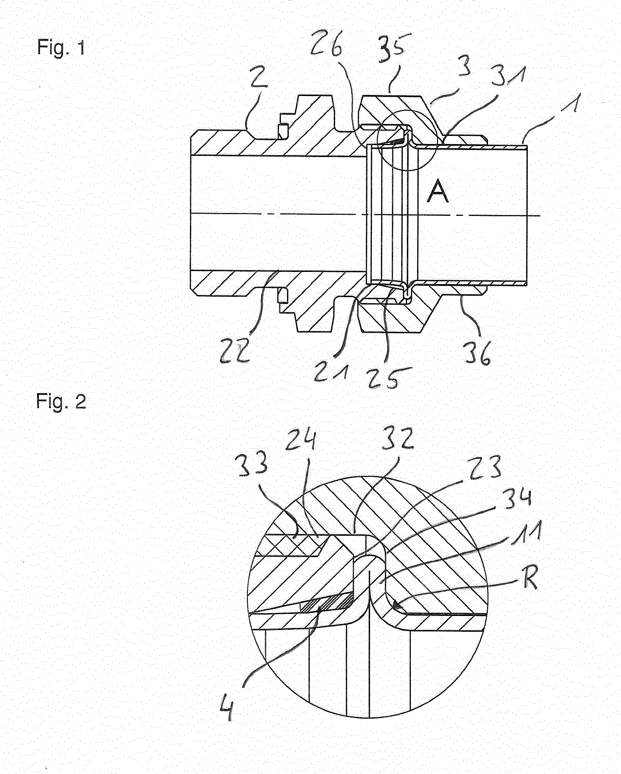

Die als Ausführungsbeispiel gewählte Verbindungsanordnung wird anhand einer Rohrverschraubung eines dünnwandigen Rohrstücks mit einem Anschlusskörper gemäß Figur 1 erläutert.

Die Verbindungsanordnung umfasst ein dünnwandiges Rohrstück 1, einen Anschlusskörper 2 sowie eine Überwurfmutter 3 zum Anschluss des Rohrstücks 1 an den Anschlusskörper 2.

Das Rohrstück 1 ist hohlzylindrisch ausgebildet und weist benachbart zu seinem Ende einen umlaufenden nach außen kragenden Abschnitt 11 auf, der durch eine Faltung des Rohrmaterials gebildet ist (vgl. Figur 2). Die Übergänge auf beiden Seiten des nach außen kragenden Abschnitts 11 zur Außenmantelfläche des Rohrstücks 1 weisen jeweils einen bogenförmigen Verlauf auf.

Der Anschlusskörper 2 ist im Wesentlichen hohlzylindrisch ausgebildet und weist eine erste zylindrische Bohrung 21 auf, an den sich eine durchmesserreduzierte zweite zylindrische Bohrung 22 anschließt, wodurch ein Anschlag 26 gebildet ist. Stirnseitig ist an dem Anschlusskörper 2 eine Anpressfläche 23 vorhanden, die quer zu der ersten zylindrischen Bohrung 21 angestellt ist. Die Anpressfläche 23 ist von einer kegeligen Bohrung 25 begrenzt, die in die erste zylindrische Bohrung 21 übergeht, mit der sie fluchtet. Endseitig weist der Anschlusskörper 2 außen im Bereich der kegeligen Bohrung 25 ein Außengewinde 24 auf.

Die Überwurfmutter 3 ist im Wesentlichen als Sechskantmutter ausgebildet und weist eine zylindrische Bohrung 31 zur Aufnahme des Rohrstücks 1 auf, an die sich eine zweite zylindrische Bohrung 32 anschließt, die gegenüber der ersten Bohrung 31 einen größeren Innendurchmesser aufweist, wodurch eine quer zu der zweiten Bohrung 32 angestellte Anschlagfläche 34 gebildet ist. Der Übergang der Anschlagfläche 34 zur ersten Bohrung 31 ist abgerundet, sodass ein bogenförmiger Querschnitt mit einem Radius R gebildet ist.

In der zweiten zylindrischen Bohrung 32 ist ein Innengewinde 33 zum Aufschrauben auf das Außengewinde 24 des Anschlusskörpers 2 angeordnet.

An den Sechskantabschnitt 35 der Überwurfmutter 3 schließt sich ein im Wesentlichen hohlzylindrisch ausgebildeter Führungsabschnitt 36 an, durch den die erste Bohrung 31 geführt ist und dessen Außendurchmesser geringer ist, als der Außendurchmesser des Sechskantabschnitts 35.

Auf das Rohrstück 1 ist endseitig ein Dichtring 4 aufgeschoben, der seitlich an dem nach außen kragende Abschnitt 11 anliegt. Das so mit dem Dichtring 4 versehende Rohrstück 1 ist in die erste zylindrische Bohrung 21 des Anschlusskörpers eingeschoben, wobei der nach außen kragende Abschnitt 11 an der Anpressfläche 23 des Anschlusskörpers 2 anliegt. Der Dichtring 4 ist in dieser Position in dem zwischen dem Rohrstück 1 und der kegeligen Bohrung 25 des Anschlusskörpers 2 begrenzten Raum dichtend angeordnet.

Die Überwurfmutter 3 ist auf das Rohrstück 1 aufgeschoben, wobei die Anschlagfläche 34 an dem nach außen kragenden Abschnitt 11 des Rohrstücks 1 anliegt. Das Rohrstück 1 ist in dem Führungsabschnitt 36 der Überwurfmutter geführt. Die Überwurfmutter 3 ist mit ihrem Innengewinde 33 auf das Außengewinde 24 des Anschlusskörpers 2 aufgeschraubt, wodurch der nach außen kragende Abschnitt 11 des Rohrstücks 1 zwischen der Anpressfläche 23 des Anschlusskörpers 2 und der Anschlagfläche 34 der Überwurfmutter 3 eingespannt ist.

Der Radius R des Übergangs der Anschlagfläche 34 der Überwurfmutter zur ersten Bohrung 31 ist so gewählt, dass er im Wesentlichen dem Radius R des Übergangs des nach außen kragenden Abschnitts 11 zur Außenmantelfläche des Rohrstücks 1 entspricht, wodurch das Rohrstück 1 auch in diesem Bereich an der Überwurfmutter 3 anliegt. Das Rohrstück 1 ist hierdurch innerhalb der Überwurfmutter 3 sowie auch durch den Führungsabschnitt 36 gut abgestützt. Dadurch ist eine maximale Unterstützung des dünnwandigen Rohrstücks 1 und somit eine Optimierung der Biegewechsel-Belastungsfähigkeit erreicht. Hierzu entspricht der Außendurchmesser des Rohrstücks 1 im Wesentlichen dem Innendurchmesser der ersten zylindrischen Bohrung 31 der Überwurfmutter, der vorzugsweise im Wesentlichen dem Innendurchmesser der ersten zylindrischen Bohrung 21 des Anschlussstücks 2 entspricht, in die es eingeschoben ist.

Auf diese Weise ist ein solider massiver Übergang zwischen der Überwurfmutter 2, dem gefalteten Rohr 1 und dem Anschlusskörper 2 gebildet.

## Patentansprüche

1. Verbindungsanordnung, umfassend ein Rohrstück (1), einen Anschlusskörper (2) und eine Überwurfmutter (3) zum Anschluss des Rohrstücks (1) an den Anschlusskörper (2), wobei
- der Anschlusskörper (2) eine erste zylindrische Bohrung (21) zur Aufnahme des Rohrstücks (1) und eine an die erste zylindrische Bohrung (21) anschließende, durchmesserreduzierte zweite zylindrische Bohrung (22) aufweist, wobei stirnseitig eine quer zur ersten zylindrischen Bohrung (21) angestellte Anpressfläche (23) vorhanden ist,
- die Überwurfmutter (3) eine erste zylindrische Bohrung (31) zur Aufnahme des Rohrstücks (1) aufweist, an die sich eine durchmesservergrößerte zweite Bohrung (32) anschließt, wobei ein Innengewinde (33) zum Aufschrauben auf ein an dem Anschlusskörper (2) hierzu angeordnetes Außengewinde (24) angeordnet ist,
- das Rohrstück (1) einen beabstandet zu seinem Ende einen umlaufenden nach außen kragenden Abschnitt (11) aufweist,
**dadurch gekennzeichnet, dass** die durchmesservergrößerte zweite Bohrung (32) der Überwurfmutter (3) zylindrisch ausgebildet ist, wodurch eine quer zu dieser angestellte Anschlagfläche (34) gebildet ist und dass der nach außen kragende Abschnitt (11) durch eine Faltung des Rohrstücks (1) gebildet ist und zwei parallel zueinander gegenüberliegenden Anlageflächen zur Anlage an der Anschlagfläche (34) der Überwurfmutter (3) einerseits und an der stirnseitigen Anpressfläche (23) des Anschlusskörpers (2) andererseits aufweist, zwischen denen der Abschnitt (11) im montierten Zustand eingeklemmt ist.

2. Verbindungsanordnung nach Anspruch 1, **dadurch gekennzeichnet, dass** der nach außen kragende Abschnitt (11) orthogonal zur Rohrachse des Rohrstücks (1) angeordnet ist, wobei der Übergang zwischen der Außenmantelfläche des Rohrstücks (1) und der der Anschlagfläche (34) der Überwurfmutter (3) zugewandten Anlagefläche des nach außen kragenden Abschnitt (11) einen kreisbogenförmigen Querschnitt mit einem Radius R aufweist, wobei der Übergang der ersten Bohrung (31) zur durchmesservergrößerten zweiten Bohrung (32) einen kreisbogenförmigen Querschnitt mit einem dem Radius R im Wesentlichen entsprechenden Radius aufweist.

3. Verbindungsanordnung nach Anspruch 1 oder 2, **dadurch gekennzeichnet, dass** der Anschlusskörper (2) eine von seiner Anpressfläche (24) ausgehende kegelige Bohrung (25) aufweist, an die sich die erste zylindrische Bohrung (21) anschließt, mit der sie fluchtet.

4. Verbindungsanordnung nach Anspruch 3, **dadurch gekennzeichnet, dass** zwischen dem Rohrstück (1) und der kegeligen Bohrung (25) ein Raum begrenzt ist, in dem ein Dichtring (4) angeordnet ist.

5. Verbindungsanordnung nach einem der vorgenannten Ansprüche, **dadurch gekennzeichnet, dass** die Überwurfmutter (3) einen Außenmehrkantabschnitt, insbesondere Außensechskantabschnitt (35) aufweist, an den sich ein außendurchmesserverminderter hohlzylindrischer Führungsabschnitt (36) anschließt.
